# EUROPÄISCHE PATENTSCHRIFT

(11) **EP 2 052 906 B1**
(45) Veröffentlichungstag und Bekanntmachung des Hinweises auf die Patenterteilung: **11.01.2012**
(21) Anmeldenummer: 08167222.2
(22) Anmeldetag: 22.10.2008
(51) Int. Cl.: B60N 3/00, B60N 2/46, B64D 11/06

(54) **Sitz mit ausfahrbarem Tisch**
Seat with extendable table
Siège doté d'une tablette rétractable

(30) Priorität: 23.10.2007 DE 102007050967
(43) Veröffentlichungstag der Anmeldung: 29.04.2009
(73) Patentinhaber: GRAMMER AG, 92224 Amberg (DE)
(72) Erfinder: Goetz, Manfred, 92245 Kümmersbruck (DE); Schneider, Franz, 92318 Neumarkt (DE); Meiller, Hermann, 92533 Wernberg-Köblitz (DE); Erker, Christian, 92256 Hahnbach (DE)
(74) Vertreter: Hannke, Christian

(56) Entgegenhaltungen:
- DE-U1- 29 603 294
- US-A- 3 583 760
- US-A- 4 852 940
- US-A1- 2006 107 877

## Beschreibung

Die Erfindung betrifft einen Sitz mit einem Sitzteil, einer Rückenlehne, mindestens einer Armlehne, mindestens einem plattenförmigen Tischelement, das aus einer im Wesentlichen vertikal ausgerichteten Nichtgebrauchsstellung in/an der Armlehne in eine im Wesentlichen horizontale Gebrauchsposition überführbar ist, gemäß dem Oberbegriff des Patentanspruches 1.

Ausfahrbare Tische, auch in Kombination mit Sitzen, sind beispielsweise aus EP 1 405 758 B1 bekannt. Es wird ein Tisch in einer Konsole beschrieben, die auf einem Fahrzeugboden eines Fahrzeuges befestigt ist. Dieser Tisch wird aus der Konsole mittels eines Schwenkarmes, der oberseitig an der Konsole angebracht ist, herausgeschwenkt und anschließend gegebenenfalls ausgeklappt. Derartig herausschwenkbare Tische lassen eine Bewegung des Tisches währende des Herausfahrens auf einer Kreisbahn zu, so dass sich hieraus eine limitierte Bewegungsfreiheit und somit eine Einschränkung der Abmaße des Tisches in Abhängigkeit von der Kreisbewegung, den Abmessungen, der Konsole und der Position des herausgeklappten Tisches ergeben.

EP 1 636 087 B1 zeigt einen verstaubaren Tisch für ein Fahrzeug, der entlang seiner oberen Kante, wenn er vertikal positioniert ist, schwenkbar aufgehängt ist und von unten nach oben geklappt werden kann. Derartige Tische erfordern das Vorhandensein eines zwingend notwendigen Mindestschwenkraums, wie er häufig bei Fahrzeugsitzen, insbesondere für Schienenfahrzeuge nicht vorhanden oder allenfalls begrenzt vorhanden ist. Eine Beeinträchtigung der benachbarten Personen oder ein Ausweichen der diesen Tisch benutzenden Personen ist nicht vermeidbar.

DE 102 30 643 B4 zeigt eine Tischanordnung zum Einsatz in einem Kraftfahrzeug, wobei die Tischanordnung an einem Basisteil des Fahrzeuges und nicht an einem Sitz befestigt ist. Der Tisch kann in Höhenrichtung nach oben geschwenkt werden, indem er hierfür an einem Schwenkarm aufgehängt ist, der als Parallelogramm ausgebildet ist. Da ein derartiger Parallelogrammarm einen Mindestschwenkradius aufweist, erfordert ein derartiger Tisch einen Mindestschwenkbereich, der einen hierfür benötigten Raum innerhalb des Fahrzeuges beansprucht.

DE 103 58 478 A1 zeigt einen in einer Armlehne eines Fluggastsitzes verstaubaren Tisch, der mittels zweier Schwenkachsen herausgeschwenkt und aufgeklappt werden kann. Der Tisch ist an einem Schwenkarm angeordnet, der einen Mindestschwenkradius benötigt, so dass der hierfür benötigte Raum zur Verfügung gestellt werden muss. Sofern dieser Raum nicht vorhanden ist, muss der Tisch in seinen Abmaßen eingegrenzt werden, um ihn innerhalb der Armlehne, die eine durch die Konstruktion des gesamten Sitzes vorgegebene Maximalgröße aufweisen kann, unterbringen zu können.

DE 296 03 294 U1 beschreibt einen Sitz mit den Merkmalen des Oberbegriffs des Anspruch 1 mit einem ausziehbaren Klapptisch, der aus zwei Tischplattenteilen besteht und in einer Konsole eines Kraftfahrzeuges eingearbeitet ist. Die Tischplattenteile werden aus einer vertikalen Ausgangsposition in eine horizontale Endposition über jeweils zwei spiegelbildlich angeordnete Kulissenführungen zwangsgeführt. Dabei weist jedes Tischplattenteil Eingriffselemente sowie Zapfen auf, welche in den Kulissenführungen in Richtung der Sitzbreite verlaufen, sodass keine Verschiebung des Tischelementes in Sitzlängsrichtung erfolgen kann.

Demzufolge liegt der vorliegenden Erfindung die Aufgabe zugrunde, einen Sitz mit einem Tisch, der in oder an der Armlehne in eine Nichtgebrauchsposition angeordnet werden kann, zur Verfügung zu stellen, bei dem ein Tisch mit großer Ablagefläche, welcher platzsparend innerhalb oder an einer Armlehne aufbewahrt werden kann, vorhanden ist.

Diese Aufgabe wird gemäß den Merkmalen des Patentanspruches 1 gelöst.

Ein wesentlicher Punkt der Erfindung liegt darin, dass bei einem Sitz mit einem Sitzteil, einer Rückenlehne, mindestens einer Armlehne und mindestens einem plattenförmigen Tischelement, das aus einer im Wesentlichen vertikal ausgerichteten Nichtgebrauchsposition in/an der Armlehne in eine im Wesentlichen horizontale Gebrauchsposition überführbar ist, eine in Sitzhöhenrichtung betrachtet von unten nach oben verlaufende Führungskulisse in/an der Armlehne zur Führung eines am Tischelement angebrachten Vorsprungs in Form eines senkrecht zu Ebene des plattenförmigen Tischelementes ausgerichteten Elementes während einer auf- oder abwärtsgerichteten Bewegung des Tischelementes angeordnet ist. Durch eine derartige Führungskulisse wird es ermöglicht, wenn diese beispielsweise bogenförmig ausgebildet ist, dass der Tisch platzsparend in vertikaler Ausrichtung innerhalb der Armlehne angeordnet werden kann, da ein Mindestschwenkradius eines Schwenkarmes hierfür nicht erforderlich ist.

Gleichzeitig kann das Tischelement maximal mögliche Tischabmaße in der Tischfläche aufweisen, ohne dass dies durch eine Schwenkbewegung um einen gegenüber der Armlehne fixiert angeordneten Drehpunkt limitiert wird. Vielmehr ist bei dem Gegenstand der vorliegenden Erfindung ein erstes Schwenklager, um welches sich das Tischelement während des Nachobenfahrens entlang der Führungskulisse schwenkt, beweglich gegenüber der Armlehne angeordnet, indem dieses an einem herausfahrbaren Stangenelement befestigt ist. Hierdurch ergibt sich eine automatisiert nach vorne stattfindende Verschiebebewegung des ersten Schwenklagers und somit des Tisches schon während des Nachobenfahrens des Tischelementes entlang der Führungskulisse, welches zu einer erwünschten Bewegungsfreiheit des den Sitz benutzenden Menschen führt.

Derartige Sitze können vorteilhaft sowohl in Schienenfahrzeugen, nämlich Bahnwaggons, als auch in Flugzeugen sowie in Kraftfahrzeugen, wie Pkws und Lkws sowie Bussen angeordnet werden.

Um den Tisch während seiner auf- und abwärtsgerichteten Bewegung, solange er noch in einer vertikalen Position ausgerichtet ist, entlang der Kulisse gleiten lassen zu können, weist das Tischelement ein vorzugsweise stiftförmiges Element als Vorsprung auf, wobei dieses stiftförmige Element senkrecht zur Ebene des plattenförmigen Tischelementes ausgerichtet ist und an dessen Unterseite bzw. in vertikaler Position an dessen zum Fahrzeugsitz hin gerichteten Innenseite angeordnet ist.

Das stiftförmige Element kann zugleich ein Anschlagselement darstellen, wenn der Tisch von seiner ausgefahrenen und vertikal ausgerichteten Position in die horizontale Position übergegangen ist und somit keine über die horizontale Position hinaus weiter nach unten gerichtete Schwenkbewegung durchführen soll.

Der bogenförmige Verlauf in im Wesentlichen vertikaler Richtung ist derart ausgebildet, dass dessen oberes Ende genauso wie dessen unteres Ende nach vorne, also in Sitzrichtung gesehen nach vorne, gerichtet ist, wohingegen der dazwischenliegende Bereich in Sitzrichtung nach hinten ausgerichtet ist. Hierdurch ergibt sich vorteilhaft, dass der Tisch während des Nachobenfahrens zunächst eine Bewegung nach hinten und anschließend eine Bewegung nach vorne erfährt, wobei während dieser Nachvornebewegung automatisch das Stangenelement, welches im Wesentlichen horizontal ausgerichtet ist, ausgefahren wird. Somit wird der Benutzer nicht unerwünscht zwischen ausgeklapptem Tisch und Rückenlehne eingeklemmt.

Das Stangenelement ist im Sitz im vorderen Bereich der Armlehne angeordnet und weist vorderseitig das erste Schwenklager auf, dessen Schwenkachse in Sitzbreitenrichtung verläuft.

Das Stangenelement ist vorteilhaft während und nach der auf- oder abwärtsgerichteten Bewegung des Tischelementes aus der Armlehne ein- oder ausfahrbar.

Ein zweites Schwenklager ist ebenso im oberen Bereich der Armlehne angeordnet, wobei dessen Schwenkachse in Verlaufsrichtung des Stangenelementes ausgerichtet ist und am Tischelement und der Armlehne zur Überführung des Tischelementes von einer vertikalen in eine horizontale Stellung befestigt ist.

Das zweite Schwenklager ist vorzugsweise aus dem das über das erste Schwenklager am Tischelement befestigte Stangenelement und einem sie umgebendes Hülsenelement, welches an der Armlehne befestigt ist, aufgebaut.

Das Hülsenelement bildet vorzugsweise zugleich ein Gleitlager zum Verschieben des Stangenelementes. Hierdurch wird vorteilhaft erreicht, dass das zweite Schwenklager und das Verschiebe- bzw. Gleitlager für das Stangenelement auf einfach Art und Weise in einem gemeinsamen Bauteil vereint sind.

Ein Reibungselement ist gemäß einer bevorzugten Ausführungsform an der Armlehne im Bereich einer Kante des nach oben gefahrenen Tischelementes angebracht und dient zum Reibungs-Beaufschlagen des Tischelementes gegen dessen Kante drückend während des Übergangs von der vertikalen in die horizontale Stellung. Hierbei kann das Reibungselement gemäß einer bevorzugten Ausführungsform als blattfederartiges Element ausgebildet sein. Somit wird vorteilhaft erreicht, dass der Tisch aufgrund der reibenden Wirkung nicht ungewollt von der oberen in die untere Stellung nach unten klappt und zugleich ein weiterer Anschlag bei entsprechender Ausbildung des Reibungselementes durch Festhalten der Tischkante im oberen Bereich erzielt wird.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in Draufsicht einen Fahrzeugsitz mit einem herausgeklappten Tisch gemäß einer Ausführungsform der Erfindung;
- Fig. 2a: eine seitliche, teilweise Querschnitts-Ansicht des erfindungsgemäßen Tisches in eingeklapptem Zustand;
- Fig. 2b: eine seitliche teilweise Querschnitts-Ansicht des erfindungsgemäßen Tisches in teilweise nach oben geschwenktem Zustand;
- Fig. 2c: eine seitliche teilweise Querschnitts-Ansicht des erfindungsgemäßen Tisches in hochgeklapptem Zustand;
- Fig. 2d: eine seitliche teilweise Querschnitts-Ansicht des erfindungsgemäßen Tisches in aufgeklappten Zustand mit Armlehne;
- Fig. 2e: in einer Ausschnittsdarstellung eine Querschnitts-Ansicht entlang C---C, wie in Fig. 2d dargestellt;
- Fig. 2f: eine seitliche teilweise Querschnitts-Ansicht des erfindungsgemäßen Tisches im aufgeklappten und nach vorne verschobenen Zustand;
- Fig. 2g: eine Ausschnittsdarstellung gemäß Detail B, wie in Fig. 2f dargestellt;
- Fig. 3a-d: eine Vorderansicht der Armlehne mit dem erfindungsgemäßen Tisch bei einem Übergang von der oberen in die nach unten geschwenkte horizontale Position und
- Fig. 4a, 4b: den erfindungsgemäßen Tisch in perspektivischer Darstellung während einer Vorwärtsbewegung.

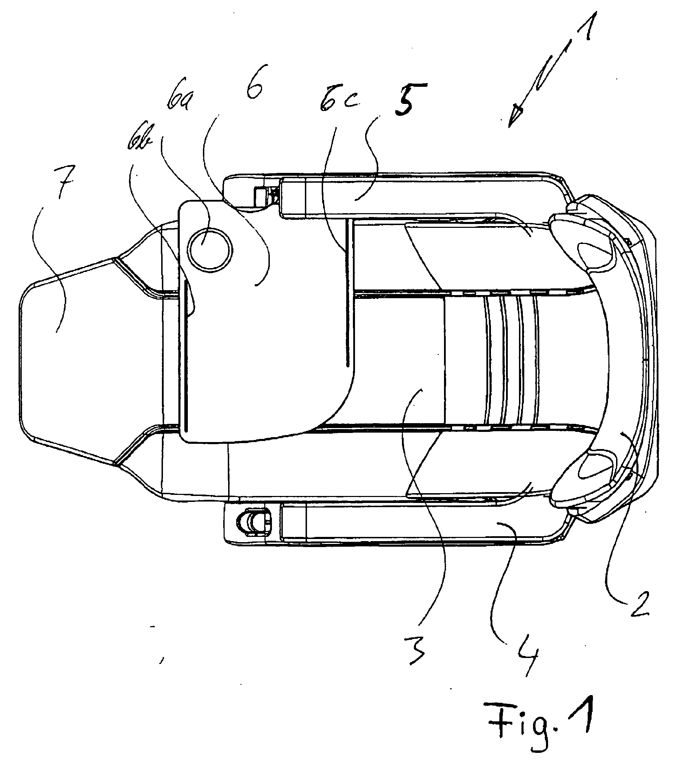

In Fig. 1 wird in einer Draufsicht ein Sitz mit einem erfindungsgemäßen Tisch dargestellt. Der Sitz 1 weist eine Rückenlehne 2 und ein Sitzteil 3 sowie Armlehnen 4, 5 auf. Innerhalb der Armlehne 5 kann ein Tisch 6 mit einem Cup-Holder 6a und Begrenzungskanten 6b und 6c vertikal angeordnet werden. Der Tisch 6 ist hier in ausgefahrenem Zustand in horizontaler Position dargestellt.
Zudem weist der Sitz 1 eine Beinauflage 7 auf, wie sie insbesondere bei Sitzen für Bahnwaggons verwendet wird.

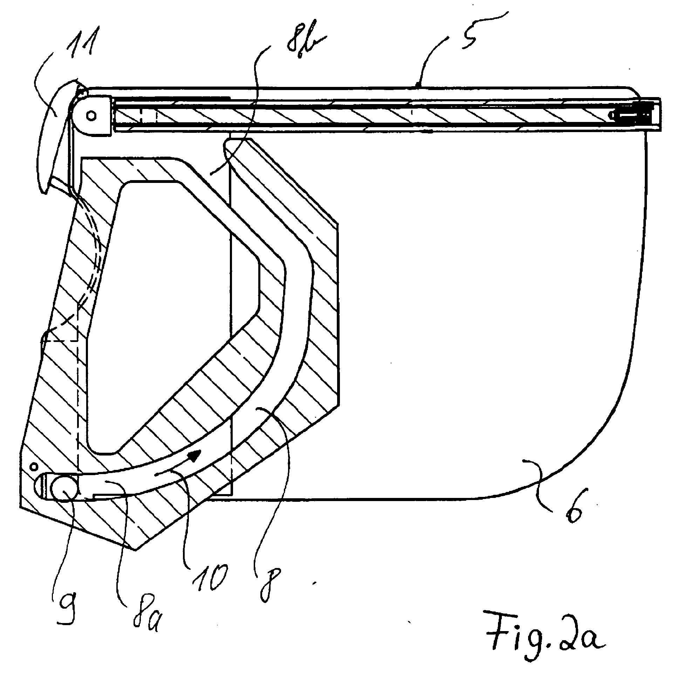

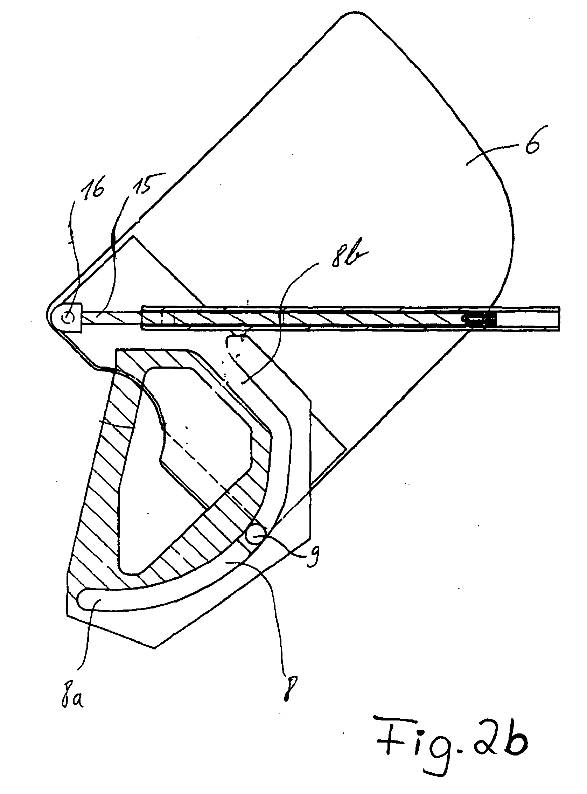

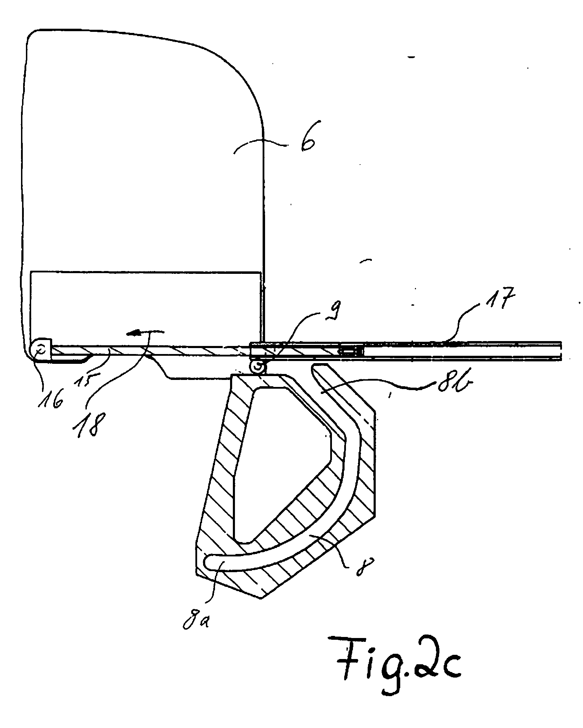

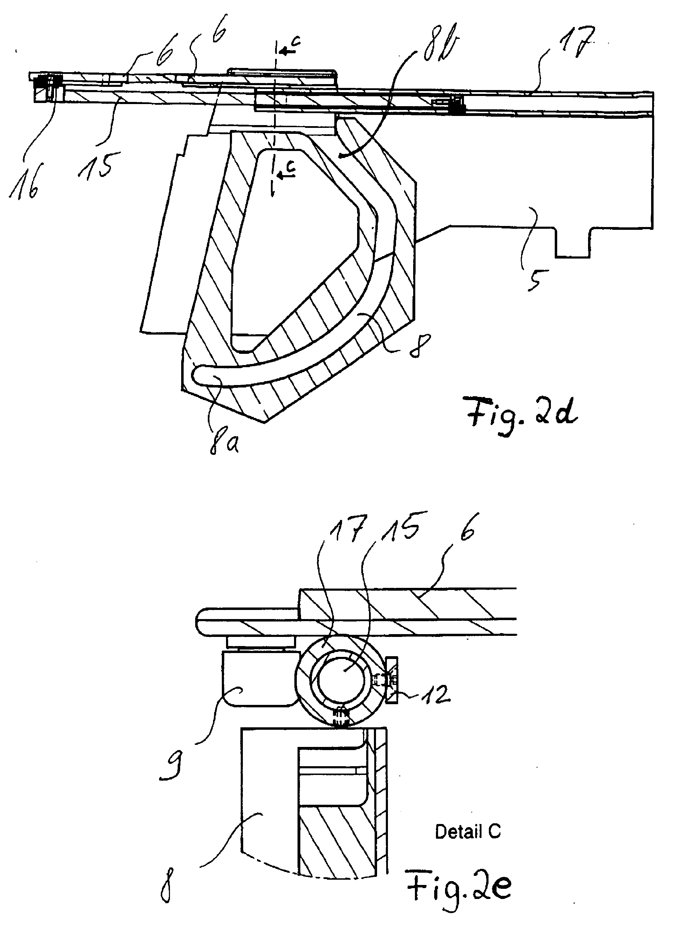

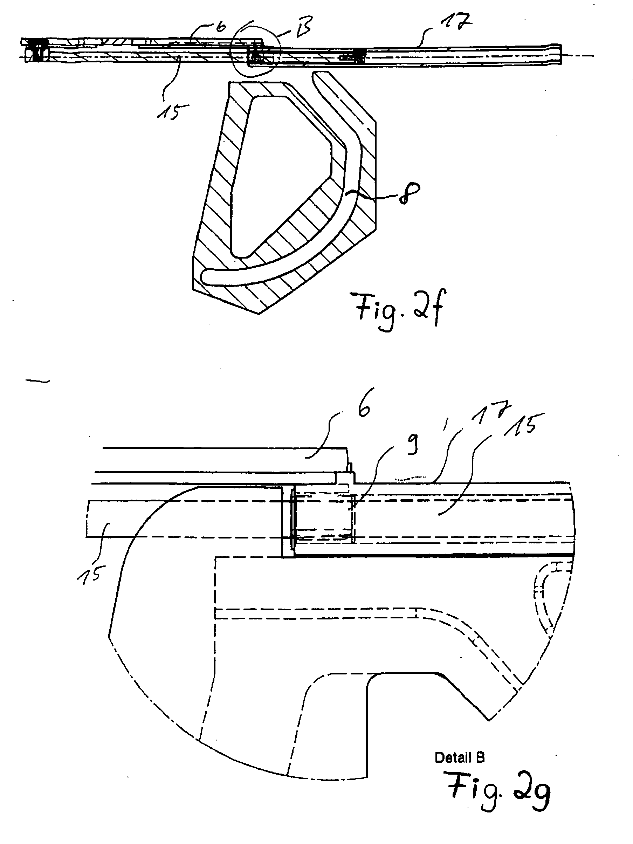

In den Figuren 2a, 2b, 2c, 2d, 2e, 2f und 2g ist in teilweiser Querschnitts-Ansicht jeweils der erfindungsgemäße Tisch teilweise mit Armlehnen und mit Detailansichten dargestellt, wobei der Tisch in verschiedenen Positionen, nämlich in eingefahrenem, teilweise ausgefahrenem, ganz ausgefahrenem, aufgeklapptem und nach vorne verschobenem Zustand dargestellt ist.

In Fig. 2a ist der Tisch in eingefahrener Position dargestellt. Der Tisch 6 kann mit einem stiftförmigen Element 9, welches an dessen Innenseite bzw. Unterseite angeordnet ist, innerhalb einer Kulisse 8, die innerhalb der Armlehne angeordnet ist, entlangfahren, wie es durch den Pfeil 10 angedeutet wird. Das stiftförmige Element 9 kann auch als rollenartiges Element mit einer Rolle ausgebildet sein, welche sich rollend in der Kulisse 8 bewegt.

Die Führungskulisse 8 weist ein unteres Ende 8a, in dem sich momentan das stiftförmige Element 9 befindet, und ein oberes Ende 8b, an dem das stiftförmige Element nach erfolgter Gleitbewegung innerhalb der Kulisse 8 angeordnet sein soll, auf.

Eine Führungsbewegung des stiftförmigen Elementes 9 innerhalb der Kulisse 8 wird durch einen Griff 11 ausgelöst, der mittels nicht näher dargestellten Gestängen, Führungskulissen und Gelenken eine Kraft auf das auszufahrende Tischelement 6 ausübt.

In Fig. 2b ist das Tischelement 6 in teilweise ausgefahrenem Zustand dargestellt. Der Darstellung ist deutlich zu entnehmen, dass, während das stiftförmige Element 9 innerhalb der Führungskulisse 8 entlangfährt, eine Schwenkbewegung um ein Schwenklager 16 stattfindet, wobei dieses Schwenklager an einem Stangenelement 15 angeordnet ist.

Das Stangenelement 15 ist gegenüber der restlichen Armlehne in Horizontalrichtung, also nach links oder rechts Bezug nehmend auf die momentane Betrachtungsweise, verschiebbar.

Bereits in dieser Position des Tischelementes 6 ist das Stangenelement 15 geringfügig nach links ausgefahren, um durch das Nachvorneschwenken des Schwenklagers 16, dessen Schwenkachse senkrecht zur Bildebene verläuft, ausreichend Raum für das Nachobenverschwenken zur Verfügung zu stellen.

In Fig. 2c ist der Tisch 6 bzw. das Tischelement nun vollständig ausgefahren. In dieser Position, in welcher das stiftförmige Element im oberen Bereich 8b der Führungskulisse 8 angeordnet ist, ist die Schwenkachse des Schwenklagers 16 bereits deutlich nach vorne geschoben worden, indem das Stangenelement 15 aus einer Hülse 17 herausgefahren worden ist. Dies wird dadurch automatisiert durchgeführt, dass das stiftförmige Element 9 innerhalb der Führungskulisse und ggf. darüber hinaus geleitet wird und somit ein Nachvorneverschieben des Stangenelementes 15, wie es durch den Pfeil 18 dargestellt wird, bewirkt.

In Fig. 2d ist in einer teilweisen Querschnitts-Ansicht der Tisch in aufgeklappten Zustand mit Teilen der Armlehne wiedergegeben. In diesem Zustand ist der Tisch von dem nach oben gefahrenen Zustand nach unten geklappt worden, so dass er eine horizontal ausgerichtete Tischfläche bildet.

In Fig. 2e ist entlang des Schnitts C---C gemäß Fig. 2d eine Ausschnittsdarstellung in einem Querschnitt dargestellt. Dieser Darstellung ist zu entnehmen, dass der Tisch oberhalb dem Stangenelement 15 und der Hülse 17 angeordnet ist, wobei das Stangenelement 15 und die Hülse 17 eine dazwischenliegende Kunststoffbuchse, auch zur besseren Lagerung, aufweisen. Eine Arretierungsschraube arretiert ein Stabilisierungsblech 12 mit der Hülse 17 zu Stabilisierungszwecken für die Hülse 17. Hierfür ist das Stabilisierungsblech an hier nicht näher dargestellten Bauteilen befestigt.

In Fig. 2f ist der Tisch in dem aufgeklappten Zustand in einer teilweisen Querschnitt-Ansicht und in einem nach vorne geschobenen Zustand wiedergegeben. In dieser Position ist der Tisch mittels des Stangenelementes 15 noch weiter aus der Hülse 17 herausgeschoben worden, um den nötigen Komfort für einen Benutzer in Abhängigkeit von dessen Sitzposition und dessen Körperumfang zu bieten.

In Fig. 2g wird in einer Detailansicht der Ausschnitt B gemäß Fig. 2f wiedergegeben.

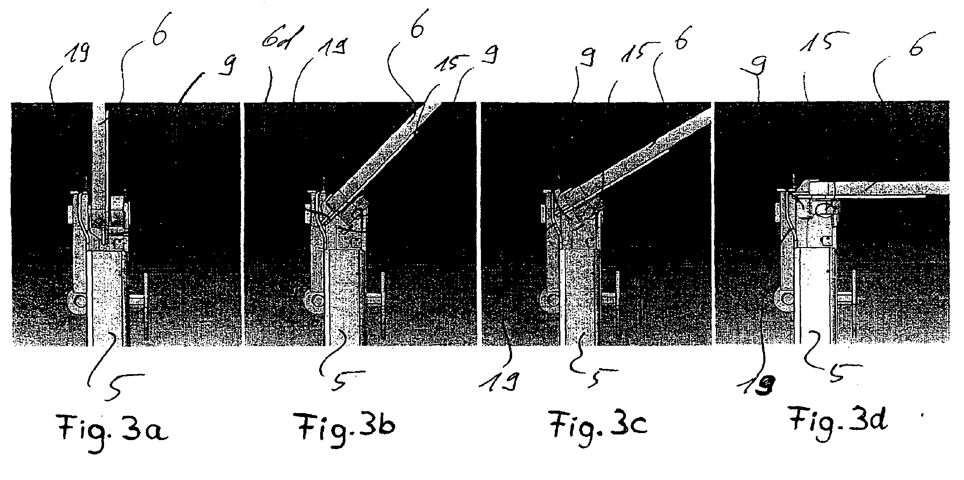

In den Figuren 3a, 3b, 3c und ggf. 3d wird nun noch mal der Ablauf des zweiten Bewegungsabschnittes des Tisches bzw. Tischelementes 6 in Vorderansichten der Armlehne und des Tischelementes dargestellt. Diesen Darstellungen ist deutlich zu entnehmen, dass nun der Tisch 6 von seiner vertikalen Ausrichtung in eine horizontale Ausrichtung übergeht. Hierfür findet eine Drehbewegung um das Stangenelement 15 statt, und zwar solange, bis das stiftförmige Element 9 gegenüber einer Außenwand oder einem damit verbundenen Element der Armlehne als Anschlagselement anschlägt. Auf diese Weise kann vorteilhaft das stiftförmige Element sowohl als Anschlagselement als auch als Führungszapfen verwendet werden. Zugleich wirkt ein Reibungselement 19 auf den rückwärtigen Kantenbereich des Tischelementes 6, um ein zu schnelles Nachuntenklappen zu vermeiden.

Dieses Reibungselement 19 kann vorteilhaft als blattfederförmiges Element ausgebildet sein, um hierdurch den Reibungswiderstand durch dessen entsprechende Ausformung in Abhängigkeit von der Schwenkposition des Tischelementes 6 individuell zu gestalten.

Das Reibungselement 19 ist zudem oberseitig zu dem Tisch hin gebogen, woraus sich ein weiteres Anschlagselement für den nach unten geklappten Tisch ergibt.

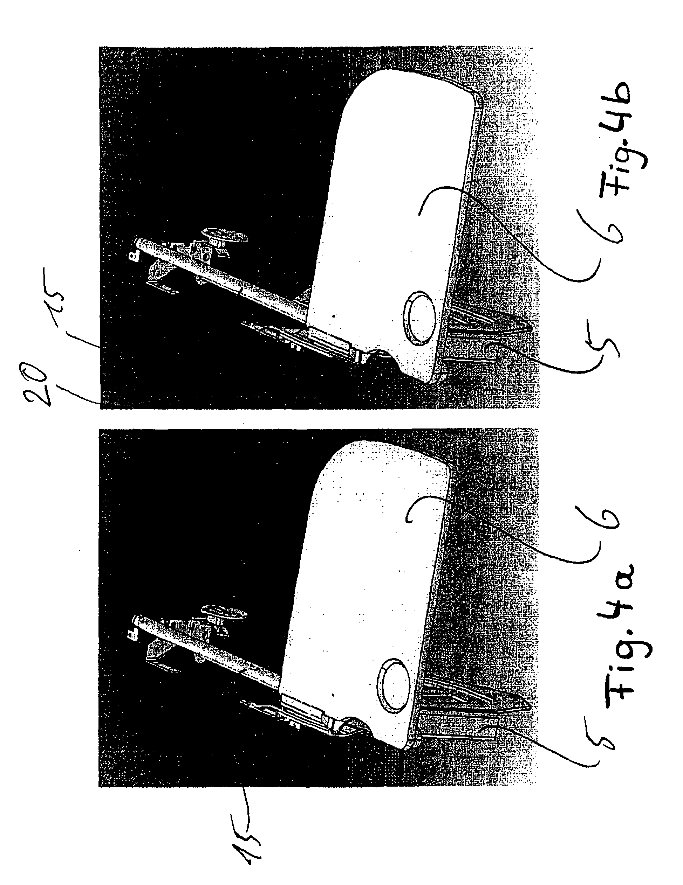

In den Figuren 4a und 4b ist in einer perspektivischen Darstellung das erfindungsgemäße Tischelement 6 in einem dritten Bewegungsabschnitt dargestellt. Gemäß diesem Bewegungsabschnitt wird das in die horizontale Position nach unten geklappte Tischelement 6 - sofern gewünscht - noch weiter nach vorne geschoben, wie es durch den Pfeil 20 angedeutet wird. Hierdurch kann vorteilhaft eine weitgehende Bewegungsfreiheit des den Sitz benutzenden Menschen erhalten werden. Wiederum findet eine derartige Gleitbewegung mittels des Stangenelementes 15 innerhalb des Hülsenelementes 17 statt.

Vorteilhaft kann eine derartige Verschiebebewegung in dem dritten Bewegungsabschnitt nur dann durchgeführt werden, wenn das Tischelement in seine horizontale Position heruntergeklappt ist. Auf diese Weise wird ein ungewolltes zu weit nach vorne gerichtetes Verschieben des Tischelementes, wenn es sich noch in vertikaler Position befindet, vermieden.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Sitz
- 2: Rückenlehne
- 3: Sitzteil
- 4,5: Armlehnen
- 6: Tisch/Tischelement
- 6a: Vertiefung für
- 6b, 6c: Tischkanten
- 6d: Kante des Tischelementes
- 7: Beinauflage
- 8: Führungskulisse
- 8a, 8b: Enden der Führungskulisse
- 9: stiftförmiges Element/Rollenelement
- 10: Bewegungsrichtung
- 11: Handgriff
- 12: Blech
- 15: Stangenelement
- 16: Erstes Schwenklager
- 17: Hülsenelement
- 18: Bewegungsrichtung
- 19: Reibungselement
- 20: Bewegungsrichtung

## Patentansprüche

1. Sitz mit
einem Sitzteil (3),
einer Rückenlehne (2),
mindestens einer Armlehne (4, 5)
und
mindestens einem plattenförmigen Tischelement (6), das aus einer im Wesentlichen vertikal ausgerichteten, Nicht-Gebrauchsposition in/an der Armlehne (4, 5) in eine im Wesentlichen horizontale Gebrauchsposition überführbar ist, mit
einen in Sitzhöhenrichtung betrachtet von unten nach oben verlaufenden Führungskulisse (8) in/an der Armlehne (4, 5) zur Führung eines am Tischelement (6) angebrachten Vorsprungs (9) während einer auf oder abwärtsgerichteten Bewegung des Tischelementes (6), **dadurch gekennzeichnet, dass** der Vorsprung ein senkrecht zur Ebene des plattenförmigen Tischelementes (6) ausgerichtetes Element (9) ist.

2. Sitz nach Anspruch 1,
**dadurch gekennzeichnet, dass**
das senkrecht zur Ebene des plattenförmigen Tischelements (6) ausgerichtete Element (9) stiftförmig ist.

3. Sitz nach Anspruch 1 oder 2,
**dadurch gekennzeichnet, dass**
die Führungskulisse (8) einen im Wesentlichen bogenförmigen Verlauf in im Wesentlichen vertikaler Richtung aufweist.

4. Sitz nach einem der vorangegangenen Ansprüche,
**gekennzeichnet durch**
ein im Sitz vorderen Bereich der Armlehne angeordnetes Schwenklager, (16), dessen Schwenkachse in Sitzbreitenrichtung verläuft, wobei das Schwenklager (16) an einem im oberen Bereich der Armlehne (4, 5) verschiebbar angeordneten, im Wesentlichen horizontal verlaufenden Stangenelement (15) befestigt ist.

5. Sitz nach Anspruch 4,
**dadurch gekennzeichnet, dass**
das Stangenelement (15) während und nach der auf- oder abwärtsgerichteten Bewegung des Tischelementes (6) aus der Armlehne (4, 5) ein- oder ausfahrbar ist (18).

6. Sitz nach Anspruch 4 oder 5,
**gekennzeichnet durch**
ein zweites Schwenklager (15, 17), dessen Schwenkachse in Verlaufsrichtung des Stangenelementes (15) ausgerichtet ist und am Tischelement (6) und der Armlehne (4, 5) zur Überführung des Tischelements (6) von einer vertikalen in eine horizontale Stellung befestigt ist.

7. Sitz nach Anspruch 6,
**dadurch gekennzeichnet, dass**
das zweite Schwenklager von dem über das erste Schwenklager (16) am Tischelement (6) befestigte Stangenelement (15) und einem sie umgebendes Hülsenelement (17), welches an der Armlehne (4, 5) befestigt ist, gebildet wird.

8. Sitz nach Anspruch 7,
**dadurch gekennzeichnet, dass**
das Hülsenelement (17) zugleich ein Gleitlager zum Verschieben des Stangenelementes (15) darstellt.

9. Sitz nach Anspruch 7 oder 8,
**dadurch gekennzeichnet, dass**
der Vorsprung (9) zugleich ein Anschlagselement zum Fixieren des Tischelementes (6) in seiner horizontalen Stellung darstellt.

10. Sitz nach einem der vorangegangenen Ansprüche,
**gekennzeichnet durch**
ein Reibungselement (19), welches an der Armlehne (4, 5) im Bereich einer Kante (6d) des nach oben gefahrenen Tischelementes angebracht ist und zum Reibungs-Beaufschlagen des Tischelementes (6) gegen dessen Kante (6d) drückend während des Übergangs von der vertikalen in die horizontale Stellung angeordnet ist.

11. Sitz nach Anspruch 10,
**dadurch gekennzeichnet, dass**
das Reibungselement (19) als blattfederartiges Element ausgebildet ist.

## Claims

1. Seat comprising
a seat part (3),
a backrest (2),
at least one armrest (4, 5)
and
at least one panel-shaped table element (6) which is movable from a substantially vertical non-use position in/on the armrest (4, 5) into a substantially horizontal use position,
with
a guide slot (8), running from bottom to top as seen in the seat height direction, in/on the armrest (4, 5) for guiding a protrusion (9) attached to the table element (6) during an upward or downward movement of the table element (6), **characterized in that** the protrusion is a element (9) oriented perpendicular to the plane of the panel-shaped table element (6).

2. Seat according to claims 1, **characterized in that** the element (9) oriented perpendicular to the plane of the paned-shaped table element (6) is pin-like.

3. Seat according to claim 1 or 2, **characterised in that** the guide slot (8) has a substantially curved profile in the substantially vertical direction.

4. Seat according to one of the preceding claims, **characterised by** a pivot bearing (16) which is arranged in the seat front region of the armrest and the pivot axis of which runs in the seat width direction, wherein the pivot bearing (16) is attached to a substantially horizontal rod element (15) which is arranged in a displaceable manner in the upper region of the armrest (4, 5).

5. Seat according to claim 4, **characterised in that** the rod element (15) is movable in or out of the armrest (4, 5) during and after the upward or downward movement of the table element (6).

6. Seat according to claim 4 or 5, **characterised by** a second pivot bearing (15, 17), the pivot axis of which is oriented in the running direction of the rod element (15) and is attached to the table element (6) and the armrest (4, 5) in order to move the table element (6) from a vertical to a horizontal position.

7. Seat according to claim 6, **characterised in that** the second pivot bearing is formed by the rod element (15) attached via the first pivot bearing (16) to the table element (6), and by a sleeve element (17) which surrounds said rod element and is attached to the armrest (4, 5).

8. Seat according to claim 7, **characterised in that** the sleeve element (17) at the same time forms a sliding bearing for displacing the rod element (15).

9. Seat according to claim 7 or 8, **characterised in that** the protrusion (9) at the same time forms a stop element for fixing the table element (6) in its horizontal position.

10. Seat according to one of the preceding claims, **characterised by** a friction element (19) which is attached to the armrest (4, 5) in the region of an edge (6d) of the upwardly displaced table element and is designed to press against the edge (6d) of the table element (6) in order to apply friction thereto during the transition from the vertical to the horizontal position.

11. Seat according to claim 10, **characterised in that** the friction element (19) is designed as a leaf-spring-type element.

## Revendications

1. Siège, comprenant :
une assise (3),
un dossier (2),
au moins un accoudoir (4, 5),
et
au moins un élément de tablette (6) en forme de plaque, que l'on peut faire passer d'une position de non utilisation orientée sensiblement verticalement dans ou sur l'accoudoir (4, 5) à une position d'utilisation sensiblement horizontale, avec
une coulisse de guidage (8) s'étendant de bas en haut dans le sens de la hauteur du siège dans ou sur l'accoudoir (4, 5) pour guider une saillie (9) montée sur l'élément de tablette (6) pendant un déplacement de l'élément de tablette (6) dirigé vers le haut ou le bas,
**caractérisé en ce que**
la saillie est un élément (9) orienté perpendiculairement au plan de l'élément de tablette (6) en forme de plaque.

2. Siège selon la revendication 1,
**caractérisé en ce que**
l'élément (9) orienté perpendiculairement au plan de l'élément de tablette (6) en forme de plaque est en forme de tige.

3. Siège selon la revendication 1 ou 2,
**caractérisé en ce que**
la coulisse de guidage (8) présente un parcours sensiblement courbe dans la direction sensiblement verticale.

4. Siège selon l'une quelconque des revendications précédentes,
**caractérisé par**
un palier de pivotement (16) agencé dans la zone avant de l'accoudoir du siège, dont l'axe de pivotement s'étend dans le sens de la largeur du siège, dans lequel le palier de pivotement (16) est fixé à un élément de tige (15) s'étendant sensiblement horizontalement et agencé à coulissement dans la zone supérieure de l'accoudoir (4, 5).

5. Siège selon la revendication 4,
**caractérisé en ce que**
l'élément de tige (15) peut être déployé ou rétracté pendant et après le déplacement de l'élément de tablette (6) dirigé vers le haut ou le bas par rapport à l'accoudoir (4, 5).

6. Siège selon la revendication 4 ou 5,
**caractérisé par**
un second palier de pivotement (15, 17), dont l'axe de pivotement est orienté selon la direction de l'élément de tige (15) et qui est fixé à l'élément de tablette (6) et à l'accoudoir (4, 5) pour faire passer l'élément de tablette (6) d'une position verticale à une position horizontale.

7. Siège selon la revendication 6,
**caractérisé en ce que**
le second palier de pivotement est formé par l'élément de tige (15) fixé à l'élément de tablette (6) via le premier palier de pivotement (16) et d'un élément de douille (17) qui l'entoure et qui est fixé sur l'accoudoir (4, 5).

8. Siège selon la revendication 7,
**caractérisé en ce que**
l'élément de douille (17) forme en même temps un palier lisse pour le coulissement de l'élément de tige (15).

9. Siège selon la revendication 7 ou 8,
**caractérisé en ce que**
la saillie (9) forme également un élément de butée pour fixer l'élément de tablette (6) dans sa position horizontale.

10. Siège selon l'une quelconque des revendications précédentes,
**caractérisé par**
un élément de frottement (19), qui est monté sur l'accoudoir (4, 5) dans la zone d'une arête (6d) de l'élément de tablette déplacé vers le haut et est agencé pour solliciter à frottement l'élément de tablette (6) par pression contre son arête (6d) au cours du passage de la position verticale à la position horizontale.

11. Siège selon la revendication 10,
**caractérisé en ce que**
l'élément de frottement (19) se présente sous la forme d'un élément de type ressort à lames.
